Europäisches Patentamt

European Patent Office

Office européen des brevets

(11) Veröffentlichungsnummer: **0 455 218 B1**

# EUROPÄISCHE PATENTSCHRIFT

(45) Veröffentlichungstag der Patentschrift: **11.01.95**

(51) Int. Cl.6: **G01J 9/02**

(21) Anmeldenummer: **91107011.8**

(22) Anmeldetag: **30.04.91**

Die Akte enthält technische Angaben, die nach dem Eingang der Anmeldung eingereicht wurden und die nicht in dieser Patentschrift enthalten sind.

(54) **Verfahren und Vorrichtung zur Messung eines phasenmodulierten Signals.**

(30) Priorität: **02.05.90 DE 4014019**

(43) Veröffentlichungstag der Anmeldung:
**06.11.91 Patentblatt 91/45**

(45) Bekanntmachung des Hinweises auf die Patenterteilung:
**11.01.95 Patentblatt 95/02**

(84) Benannte Vertragsstaaten:
**CH DE FR GB IT LI NL SE**

(56) Entgegenhaltungen:
**DD-A- 262 080**
**DE-A- 3 707 331**
**US-A- 4 744 659**

**PROCEEDINGS OF THE SPIE, vol. 680, Katherine Creath: "Comparison of Phase Measurement Algorithms", USA, 1986**

**APPLIED OPTICS, vol. 24, no. 18, Y. Cheng et al.: "Phase shifter calibration in phase-shifting interferometry", 15.09.1985, Seiten 3049-3052**

(73) Patentinhaber: **Firma Carl Zeiss**

**D-73446 Oberkochen (DE)**

(84) Benannte Vertragsstaaten:
**CH DE FR IT LI NL SE**

(73) Patentinhaber: **CARL ZEISS-STIFTUNG HANDELND ALS CARL ZEISS**

**D-89518 Heidenheim (Brenz) (DE)**

(84) Benannte Vertragsstaaten:
**GB**

(72) Erfinder: **Küchel, Michael, Dr.**
**Keplerstrasse 3**
**W-7082 Oberkochen (DE)**

PROGRESS IN OPTICS, vol. XXVI, ed.: E. Wolf; Katherine Creath: "Phase-Measurement Interferometry Techniques", Elsevier Science Publishers B.V., Amsterdam, Oxford, New York, Tokyo, 1988

Patent Abstracts of Japan, unexamined applications, P field, Band 12, Nr. 284, 4. August 1988, The Patent Office Japanese Government, Seite 67 P 740

Optical Engineering, Band 23, Nr. 4, Juli/August 1984, K.H. Womack, "Interferometric phase measurement using spatial synchronous detection", Seiten 391-395

Applied Optics, Band 22, Nr. 21, November 1983, J. Schwider et al, "Digital wave-front measuring interferometry: same systematic error sources", Seiten 3421-3432

**Beschreibung**

Die Erfindung betrifft ein Verfahren zur Messung der Phase eines Signals, das auf einer Trägerwelle durch Phasenmodulation aufmoduliert ist. Die Erfindung betrifft außerdem eine Vorrichtung mit der ein solches Verfahren durchführbar ist.

Solche Verfahren werden in vielen Bereichen der Meßtechnik, insbesondere in der optischen Meßtechnik angewandt. Das eigentliche Meßsignal ist dabei einer Trägerwelle überlagert, so daß sich das Meßsignal durch eine Frequenz- oder Phasenmodulation des Gesamtsignals ausdrückt. In der Phasenmeßtechnik wird das Signal bei mehreren Phasenlagen gemessen, wobei zwischen den Phasenlagen bezüglich der Trägerwelle definierte Phasenstufen liegen. Die einfachste bekannte Auswerteformel ergibt sich, wenn z.B. drei Meßwerte aufgenommen werden, die bezüglich der Trägerwelle bei den Phasenlagen $\pi/4$, $3\,\pi/4$ und $5\,\pi/4$ liegen. Aufgrund der Phasenmodulation wird das Gesamtsignal bei geringfügig veränderten Phasenlagen gemessen, d.h. die Phasenlagen bezüglich des Gesamtsignals entspricht nicht den gewünschten Phasenlagen bezüglich der Trägerwelle. Die Folge davon ist, daß systematisch fehlerhafte Phasenwerte des Modulationssignals gemessen werden, so daß das Verfahren nur dann hinreichend genaue Ergebnisse liefert, wenn die Frequenz des Modulationssignals wesentlich kleiner als die Frequenz der Trägerwelle ist.

Anwendung findet die Phasenmeßtechnik in der optischen Meßtechnik zur Auswertung von Streifenbildern. Beispielsweise ist aus der US-PS 4744659 ein Interferometer bekannt, dessen Referenz- und Meßstrahl mit vorgegebenen Neigungswinkeln zueinander auf einer Detektoroberfläche interferieren. Durch diese Neigung der beiden Strahlen wird auf der Detektoroberfläche ein Streifenmuster erzeugt, das eine räumliche Trägerwelle darstellt. Die Frequenz dieser Trägerwelle ist durch den Neigungswinkel bestimmt. Abweichungen des Oberflächenprofils der Meßoberfläche vom Oberflächenprofil des Referenzspiegels führen zu einer räumlichen Modulation des Streifenbildes, d.h., die Phasenlage des Streifenbildes weicht lokal von der durch den Neigungswinkel bestimmten Phasenlage der Trägerwelle ab. Die Intensitätsverteilung des Streifenmusters wird gemessen und durch zweimalige Fourier-Transformation der Intensitätsverteilung wird die Abweichung der Phasenlage des Streifenmusters von der durch den Neigungswinkel bestimmten Trägerwelle berechnet. Dazu wird durch eine Fensterfunktion ein Seitenband des Raumfrequenzspektrums ausgefiltert.

Die zweimalige Fourier-Transformation bedeutet jedoch einen recht großen Rechenaufwand. Eine Auswertung der Interferogramme in Video-Echtzeit ist deshalb nicht möglich. Außerdem wirkt die Herausfilterung des Seitenbandes als Tiefpaßfilter, wodurch die Meßwerte verfälscht werden.

Alternativ zur Auswertung von Vielstreifeninterferogrammen durch Fourier-Transformation ist es aus Optical Engineering, 23, 391, (1984) bekannt, die gemessene Intensitätsverteilung des Streifenmusters mit einer Funktion der Frequenz der Trägerwelle zu multiplizieren und das Produkt mit einer Fensterfunktion zu falten. Diese Fensterfunktion ist so gewählt, daß zur Berechnung des Phasenwertes in einem Punkt des Interferogrammes die Interferogrammintensitäten eines räumlichen Bereichs herangezogen werden, der sich über mehrere Perioden der Trägerwelle erstreckt. Auch hier bedeutet die Faltung der Intensitätsmeßwerte über mehrere Perioden der Trägerwelle eine Tiefpaßfilterung, wodurch die räumliche Auflösung reduziert ist. Eine Analyse der bei der Berechnung der Phasenwerte auftretenden Fehler, insbesondere bei von der Trägerfrequenz abweichender Streifenfrequenz, wird nicht geliefert.

Aufgrund der eingangs genannten systematischen Fehler in der Phasenmeßtechnik liefern die Verfahren zur Auswertung von Vielstreifeninterferogrammen prinzipiell nur dann richtige Phasenwerte, wenn die Streifenfrequenz des Streifenmusters mit der durch den Neigungswinkel bestimmten Streifenfrequenz übereinstimmt, d.h., wenn das Profil der Meßoberfläche mit dem Profil der Referenzfläche übereinstimmt. Da aber gerade die Abweichungen beider Profile gemessen werden sollen, sind die interessierenden Meßwerte mit einem entsprechenden systematischen Fehler behaftet.

Darüber hinaus ist beispielsweise aus Applied Optics, 22, 3421, (1983) die sogenannte Phasenverschiebeinterferometrie bekannt. Hierbei werden mehrere Interferogramme ohne eine räumliche Trägerwelle zeitlich nacheinander aufgenommen. Statt der räumlichen Trägerwelle wird eine zeitliche Trägerwelle dadurch erzeugt, daß zwischen der Aufzeichnung der Interferogramme der Referenzspiegel parallel zur optischen Achse (n-1)-mal um dieselbe Strecke $\lambda/2n$ verschoben wird, wobei $\lambda$ die Wellenlänge des Lichtes im Interferometer ist. Dies bewirkt jeweils eine Phasenverschiebung um $2\,\pi/n$, wobei n die Anzahl der Interferogramme ist. Aus mindestens vier Interferogrammen wird zu jedem Punkt der Interferogramme ein Phasenwert $\Phi = \arctan(Z/N)$ berechnet, wobei Z und N aus den Intensitäten der Interferogramme berechnet werden.

Die erreichbare Genauigkeit in der Phasenverschiebeinterferometrie hängt nun wesentlich von der Genauigkeit ab, mit der die Verschiebungen des Referenzspiegels bezüglich der vorgesehenen Verschiebung erfolgt. Deshalb werden zur Verschiebung hochwertige und teure Piezo-Translatoren eingesetzt.

3

Eine Analyse des Fehlers des Phasenwertes als Funktion von der tatsächlich erfolgten Phasenverschiebung zeigt, daß der Fehler bei der vorgesehenen Phasenverschiebung den Wert Null hat und bei Abweichung von der vorgesehenen Phasenverschiebung im wesentlichen betragsmäßig linear anwächst. Es wird in der zitierten Druckschrift vorgeschlagen, das Meßverfahren zweimal nacheinander durchzuführen. Zwischen beiden Durchgängen wird die Phase noch einmal um $\pi/2$ verschoben. Wird nach dem ersten Durchgang der Phasenwert nach der Gleichung $\tan(\Phi_1) = Z_1/N_1$ und nach dem zweiten Durchgang nach der Gleichung $\tan(\Phi_2) = Z_2/N_2$ berechnet, so ergibt sich ein verbesserter Phasenwert $\tan(\Phi) = (Z_1 + Z_2)/(N_1 + N_2)$.

Es ist die Aufgabe der vorliegenden Erfindung, ein Verfahren der eingangs genannten Art anzugeben, bei dem die systematischen Meßfehler deutlich reduziert sind. Außerdem soll die Erfindung eine Vorrichtung angeben, mit der ein solches Meßverfahren mit reduziertem systematischem Fehler durchführbar ist.

Diese Aufgabe wird erfindungsgemäß durch die Merkmale der Ansprüche 1, 6 und 9 gelöst.

Es werden also mindestens drei Sätze von Meßwerten derart aufgenommen, daß sich aus jedem der drei Sätze von Meßwerten ein Phasenwert $\Phi_i = \arctan(Z_i/N_i)$ berechnen läßt (i kennzeichnet den i-ten Meßwertsatz, $i = 1, 2, ..., m$; $m \geq 3$). Für ein Signal mit der Frequenz der Trägerwelle berechnet sich aus allen drei Sätzen von Meßwerten derselbe korrekte Phasenwert $\Phi = \Phi_i$ für alle i. Wesentlich für das erfindungsgemäße Verfahren ist die Erkenntnis, daß sich dann auch aus den Linearkombinationen der $Z_i$ und der $N_i$ ein korrekter Phasenwert

$$\Phi = \arctan\left(\sum_{i=1}^{m} a_i Z_i \Big/ \sum_{i=1}^{m} a_i N_i\right), \quad m \geq 3$$

berechnen läßt. Die $a_i$ sind so gewählt, daß der Phasenfehler als Funktion der Phasenverschiebung mindestens drei Nullstellen hat. Dabei können die Nullstellen bei geeigneten $a_i$ auch zu einer einzigen Nullstelle entartet sein. In diesem Falle haben neben der Fehlerfunktion auch die erste und die zweite Ableitung der Fehlerfunktion an der Nullstelle den Wert Null. Bestimmungsgleichungen für die $a_i$ ergeben sich dadurch, daß Übereinstimmung der Ausdrücke

$$\left(\sum_i a_i Z_i \Big/ \sum_i a_i N_i\right)$$

für mehrere unterschiedliche Phasenstufen gefordert wird.

Wie bereits in Applied Optics, 22, 3421, (1983) gezeigt wurde, hat der Phasenfehler in Abhängigkeit von den tatsächlichen Phasenstufen einen Verlauf, der proportional zu $\sin 2\Phi$ mit einer Amplitude $\epsilon$ ist. Betragsmäßige Maxima des Phasenfehlers treten dabei in unmittelbarer Umgebung der Phasenwerte $\Phi = -135°$, $\Phi = -45°$, $\Phi = 45°$, $\Phi = 135°$ auf. Als Fehlerfunktion des Phasenwertes ist die maximale Amplitude $\epsilon$ bezeichnet, die sich ergibt, wenn die tatsächlichen Phasenstufen von den Sollphasenstufen abweichen. Der Erfindung liegt die Erkenntnis zugrunde, daß die Anzahl der Nullstellen der Fehlerfunktion um so größer gewählt sein kann, je mehr Sätze von Meßwerten in der Linearkombination verwendet werden.

Vorzugsweise wird für jeden Satz von Meßwerten das Signal bei drei verschiedenen Phasenlagen gemessen. Die Anzahl der Meßwerte in jedem Satz ist dann minimal. Auch sollten einige der Meßwerte gleichzeitig zu mehreren verschiedenen Sätzen von Meßwerten gehören. Wenn das Signal dann insgesamt bei m verschiedenen Phasenlagen gemessen wird, kann zur Auswertung eine Formel verwendet werden, deren Fehlerfunktion (m-2) Nullstellen hat.

Alle Meßwerte sollten vorzugsweise auch in einer Periode der Trägerwelle aufgenommen werden. Die Meßauflösung ist dann groß und die Tiefpaßfilterung gering.

Das erfindungsgemäße Verfahren eignet sich besonders gut zur Auswertung von Streifenbildern, insbesondere von Vielstreifenbildern. Die Vielstreifenbilder können insbesondere interferometrisch oder durch Aufnahme eines auf einen Prüfling projizierten Streifenmusters erzeugt sein. Es ermöglicht die getrennte Auswertung einzelner Vielstreifenbilder mit hoher Genauigkeit.

Das Verfahren ist jedoch auch vorteilhaft in der eingangs genannten Vielstreifeninterferometrie einsetzbar. Es sind dann die Phasenstufen mit geringerer Genauigkeit einzuhalten, wobei gleichzeitig eine hohe Meßgenauigkeit gewährleistet ist.

Eine hardware-mäßig aufgebaute Vorrichtung zur Durchführung des erfindungsgemäßen Verfahrens sieht mindestens 5 Detektoren vor, die das Signal bei 5 verschiedenen Phasenlagen abtasten. Die Ausgangssignale jedes Detektors werden zwei verschiedenen Verstärkungseinheiten zugeführt, in denen diese Ausgangssignale jeweils um festeingestellte Faktoren verstärkt und anschließend in zwei verschiedenen Additionseinheiten aufakkumuliert werden. Eine Auswerteeinheit berechnet aus den verstärkten und aufakkumulierten Detektorsignalen einen zugehörigen Phasenwert durch Bildung des Arcustangens des Quotienten der Ausgangssignale der beiden Additionseinheiten. Alternativ können die geschilderten Operationen auch sehr schnell mit moderner digitaler Elektronik durchgeführt werden. Die Berechnung der Phase $\phi$ aus den beiden Größen Z und N geschieht dann durch Abgriff einer tabellierten Funktion. Die Verstärkungsfaktoren der beiden Verstärkungseinheiten sind für jeden Detektor derart gewählt, daß der Phasenfehler als Funktion der Phasenstufen mindestens drei Nullstellen hat. Mit einer solchen Vorrichtung kann zu jedem Punkt eines optischen Streifenmusters ein Phasenwert sehr genau berechnet werden. Die Detektoren sollten dann optoelektronische Sensoren sein.

Bei einem vorteilhaften Ausführungsbeispiel sind die Sensoren zeilen- und spaltenweise auf einer Fläche angeordnet. Die Anzahl der Zeilen und Spalten sollte gleich sein. Es erweist sich dann als vorteilhaft, wenn die Streifen des Streifenmusters diagonal zu den Zeilen und Spalten der Sensoren liegen, wodurch die räumliche Auflösung verbessert wird.

Zur räumlich hochaufgelösten und genauen Auswertung eines einzelnen Vielstreifenbildes ist in einer Vorrichtung gemäß Anspruch 9 vorgesehen, daß zwei Faltungsbausteine durch eine Faltung der Helligkeitswerte des von einer Kamera aufgezeichneten Bildes zwei Ausdrücke (Z,N) berechnen, aus denen ein zu einem Bildpunkt gehöriger Phasenwert berechnet wird. Die Faltungsgewichte, mit denen die Helligkeitswerte multipliziert werden, sind dabei so gewält, daß der Phasenfehler als Funktion der Phasenverschiebung mindestens drei Nullstellen hat.

Vorzugsweise hat die Kamera einen CCD-Sensor, und das Streifenmuster ist vorzugsweise diagonal zu den Spalten und Zeilen des Kamerasensors orientiert.

Eine solche Anordnung ermöglicht die Auswertung des Vielstreifenbildes in Video-Echtzeit, so daß diese Anordnung auch gegen äußere Störungen, beispielsweise Vibrationen, unempfindlich ist. Im folgenden werden Einzelheiten der Erfindung anhand der Zeichnungen näher erläutert. Im einzelnen zeigen:

Figur 1a: drei Diagramme von Signalintensitäten als Funktion einer Variablen P

Figur 1b: ein Diagramm der Phasenfehler als Funktion der Phasenstufen, die sich für verschiedene Auswerteformeln ergeben;

Figur 2a: eine schematische Darstellung der Anordnung von Streifenbildern;

Figur 2b: eine schematische Darstellung eines Kamera-Sensors;

Figur 3: eine schematische Darstellung einer Anordnung zur Messung von Streifenphasen;

Figur 4: eine schematische Darstellung eines Interferometers zur Längenmessung, das die Anordnung aus Figur 3 als Detektor enthält.

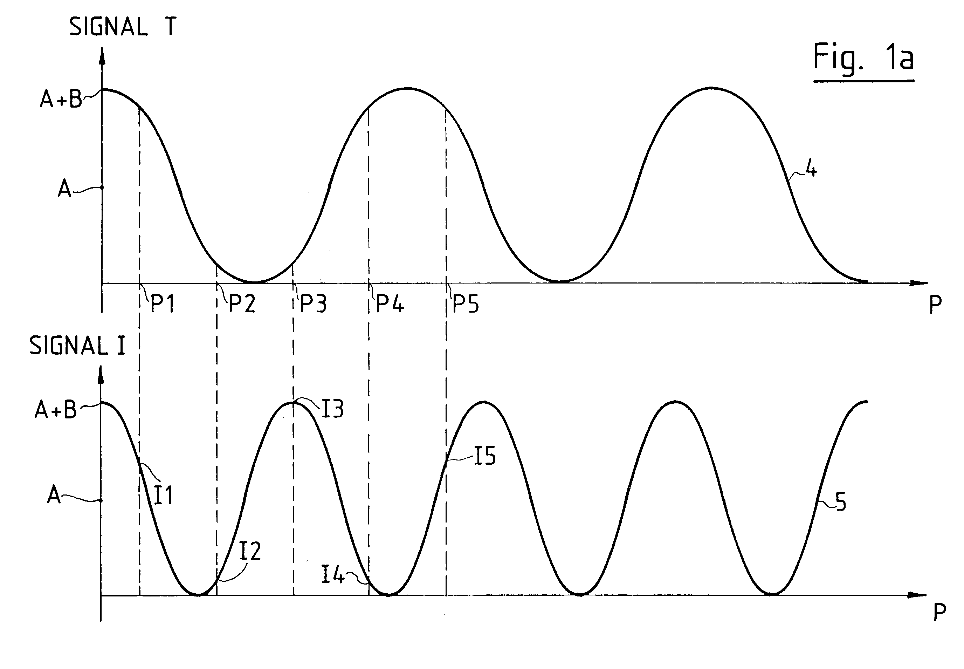

In der Figur 1a ist mit (5) ein phasenmoduliertes Signal $I(P) = A + B \cos(\phi + P)$ dargestellt, wobei die Variable P sowohl den Ort als auch die Zeit bezeichnen kann. Das Signal (5) ist durch Phasenmodulation der periodischen Trägerwelle (4) $T(P) = A + B \cos(P)$ hervorgegangen. Die Aufgabe der Phasenmeßtechnik ist es, den Phasenwert $\phi$ als Funktion der Variablen (P) zu messen. Der erste Fall, in dem die Variable (P) den Ort kennzeichnet, ist insbesondere bei der Auswertung von Vielstreifenbildern relevant. Der zweite Fall, in dem die Variable (P) die Zeit beschreibt, betrifft insbesondere die Phasenschiebeinterferometrie, in der mehrere, zeitlich nacheinander aufgezeichnete Interferogramme ausgewertet werden.

Das phasenmodulierte Signal I(P) wird nun bei fünf verschiedenen Phasenlagen, also bei fünf verschiedenen Werten (P1 bis P5) der Variablen (P) gemessen. Die Differenzen dieser Phasenlagen bilden die Phasenstufen. Die jeweils dazugehörigen phasenmodulierten Signale I1 bis I5 sind dann durch folgende 5 Gleichungen gegeben:

$$I1 = A + \cos\{P1\} * B^*\cos\{\phi\} - \sin\{P1\} * B^*\sin\{\phi\}$$
$$I2 = A + \cos\{P2\} * B^*\cos\{\phi\} - \sin\{P2\} * B^*\sin\{\phi\}$$
$$I3 = A + \cos\{P3\} * B^*\cos\{\phi\} - \sin\{P3\} * B^*\sin\{\phi\}$$
$$I4 = A + \cos\{P4\} * B^*\cos\{\phi\} - \sin\{P4\} * B^*\sin\{\phi\}$$
$$I5 = A + \cos\{P5\} * B^*\cos\{\phi\} - \sin\{P5\} * B^*\sin\{\phi\}$$

Mit diesen 5 Gleichungen sind prinzipiell drei Auswertungen des Phasenwerts an der Stelle (P3) der Variablen (P) unter Verwendung von (I1, I2, I3), von (I2, I3, I4) und von (I3, I4, I5) möglich, die jeweils den gleichen Phasenwert $\phi = \phi1 = \phi2 = \phi3$ mit

$\phi_1$ = arctan [ (I1* (cos{P2}-cos{P3}) + I2*(cos{P3}-cos{P1}) + I3*(cos{P1}-cos{P2}))/(I1*(sin{P2}-sin{P3})-
+ I2*(sin{P3}-sin{P1}) + I3*(sin{P1}-sin{P2}))]

$\phi_2$ = arctan [(I2*(cos{P3}-cos{P4}) + I3*(cos{P4}-cos{P2}) + I4*(cos{P2}-cos{P3}))/(I2*(sin{P3}-sin{P4})-
+ I3*(sin{P4}-sin{P2}) + I4*(sin{P2}-sin{P3}))]

$\phi_3$ = arctan [(I3*(cos{P4}-cos{P5}) + I4*(cos{P5}-cos{P3} + I5*(cos{P3}-cos{P4}))/(I3*(sin{P4}-sin{P5})-
+ I4*(sin{P5}-sin{P3}) + I5*(sin{P3}-sin{P4}))]

ergeben sollten.

Es werden also mindestens drei Sätze von Meßwerten derart aufgenommen, daß sich aus jedem der drei Sätze von Meßwerten ein Phasenwert $\phi i$ = arctan (Zi/Ni) berechnen läßt (i kennzeichnet den i-ten Meßwertsatz, i = 1, 2, ..., m; m $\geq$3).

Erfindungsgemäß werden jedoch nicht die 3 Phasenwerte $\phi 1$, $\phi 2$, $\phi 3$ jeweils getrennt berechnet, sondern es wird ein gemittelter Phasenwert

$$\phi = \text{arctan } Z/H = \text{arctan } ((a_1 Z_1 + a_2 Z_2 + a_3 Z_3)/(a_1 N_1 + a_2 N_2 + a_3 N_3)) \qquad (Gl.2)$$

berechnet. Die Faktoren $a_1$, $a_2$, $a_3$ sind dabei so bestimmt, daß der Phasenfehler als Funktion der Phasenstufen mindestens 3 Nullstellen hat.

Wenn das phasenmodulierte Signal anstelle bei fünf Werten der Variablen P allgemein bei k Werten der Variablen (P) gemessen wird, dann können Linearkombinationen aus insgesamt (k-2) Ausdrücken $Z_i,N_i$ mit i = 1 bis (m = k-2) zur Berechnung des Phasenwertes

$$\phi = \text{arctan}\left(\left(\sum_{i=1}^{m} a_i Z_i\right)/\left(\sum_{i=1}^{m} a_i N_i\right)\right) \qquad (Gl. 3)$$

verwendet werden. In diesem Fall sind die $a_i$ so gewählt, daß der Phasenfehler als Funktion der Phasenstufen (m-2) Nullstellen hat. Einige dieser Nullstellen können auch zu Nullstellen höherer Ordnung entartet sein. Zur Berechnung dieser $a_i$ werden zusätzliche Bedingungsgleichungen aufgestellt, beispielsweise daß die

$$\left(\sum_{i=1}^{m} a_i Z_i\right)/\left(\sum_{i=1}^{m} a_i N_i\right)$$

für bestimmte Phasenstufen identisch sind.

In dem in Fig. 1a konkret dargestellten Beispiel wird das phasenmodulierte Signal (5) bei Werten (P1 - P5) der Variablen (P) gemessen, die bezüglich der Trägerwelle (4) jeweils um 90 ° verschoben sind. Die Sollphasenstufen sind hier alle identisch und betragen 90°.

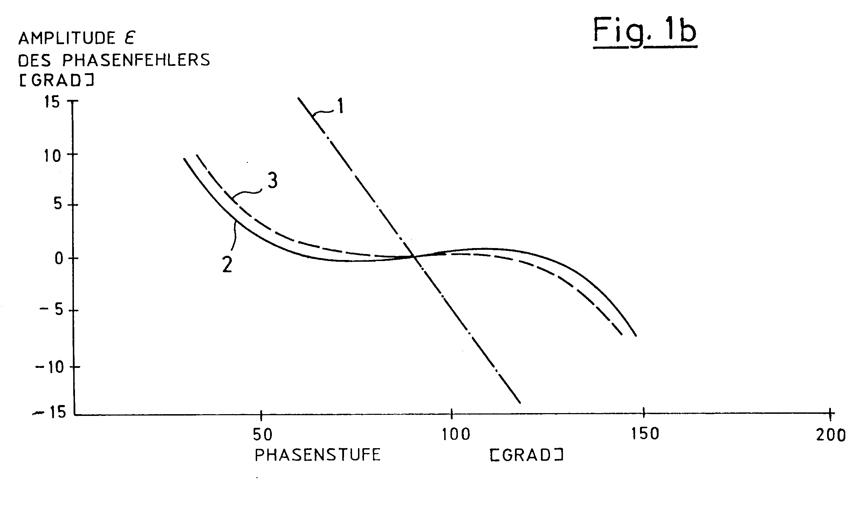

In der Fig. 1b sind exemplarische Phasenfehler als Funktion der Phasenstufen aufgetragen, wenn die tatsächlichen Phasenstufen von der Sollphasenstufe abweicht. Wie bereits in Applied Optics, 22, 3421, (1983) gezeigt wurde, hat der Phasenfehler in Abhängigkeit von den Phasenstufen zwischen den Meßpunkten einen Verlauf, der proportional zu sin(2$\phi$) mit einer Amplitude $\epsilon$ ist. Betragsmäßige Maxima des Phasenfehlers treten dabei in unmittelbarer Umgebung der Phasenwerte $\phi$ = -135°, $\phi$ = -45°, $\phi$ = 45 °, $\phi$ = 135° auf. Als Fehlerfunktion des Phasenwertes ist die maximale Amplitude $\epsilon$ aufgetragen, die sich ergibt, wenn die Phasenstufen von den Sollphasenstufen abweichen.

Mit 1 ist in der Fig. 1b derjenige Phasenfehler aufgetragen, der sich bei Verwendung von lediglich 3 Meßpunkten zur Berechnung des Phasenwertes $\phi$ ergibt. Diese Fehlerfunktion zeigt, daß korrekte Phasenwerte nur dann berechnet werden, wenn der Abstand zwischen benachbarten Meßpunkten (Pi, Pi + 1), (i = 1-4), jeweils $\pi$/2 die Sollphasenstufe, beträgt. Bei einer Abweichung der Phasenstufen von dieser Sollphasenstufe steigt der Phasenfehler betragsmäßig linear zur Abweichung von der Sollphasenstufe an.

Mit (2) und (3) sind die Fehlerfunktionen bezeichnet, die sich bei Berücksichtigung von 5 Meßpunkten (P1 - P5) gemäß Gl. 3) für k = 5 ergeben. Die Kurve (2) kennzeichnet den Fehlerverlauf, wenn a1 = 1, a2 = √3 und a3 = 1 sind. Diese Fehlerfunktion hat bei Phasenstufen von 60°, 90°, 120° jeweils eine Nullstelle. Die Kurve 3 kennzeichnet dagegen den Fehlerverlauf, wenn a1 = 1, a2 = 2 und a3 = 1 ist. Diese Fehlerfunktion hat eine dreifache Nullstelle bei einer Phasenstufe von 90°. Insgesamt zeigt sowohl die Kurve (2) als auch die Kurve (3) einen deutlich flacheren Verlauf als die Kurve (1). Dies bedeutet, daß bei einer Abweichung des Abstandes zwischen den Meßpunkten (P1 - P5) von der Sollphasenstufe der bei der Berechnung des Phasenwertes $\phi$ auftretende Fehler gering bleibt.

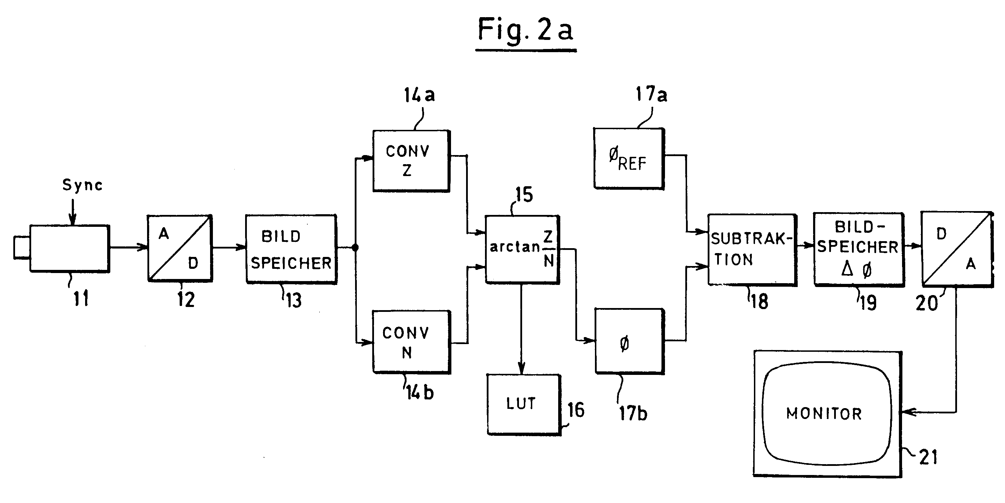

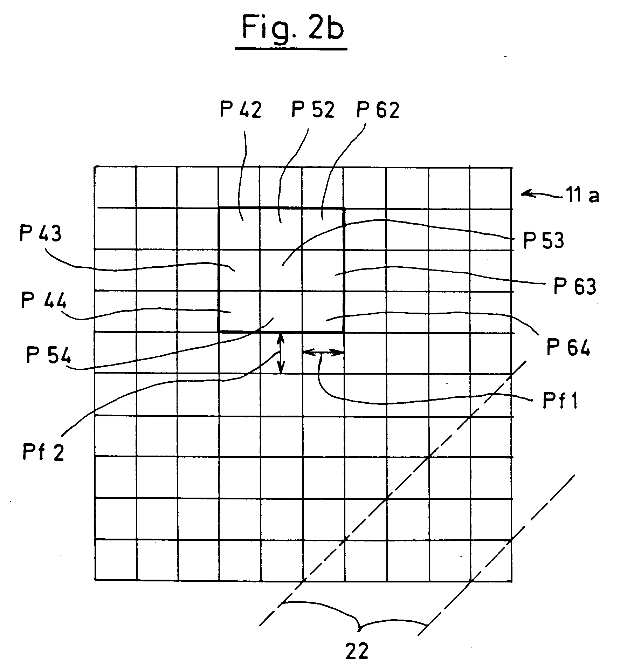

Die Anordnung nach den Figuren 2a und 2b hat eine Kamera (11), die ein zweidimensionales Streifenmuster aufzeichnet. Die Ausgangssignale der Kamera (11) werden in einem Analog-Digital-Wandler digitalisiert und einem Bildspeicher (13) zugeführt. Der Bildspeicher (13) dient lediglich als Pufferspeicher. Auf ihn kann verzichtet werden, wenn die nachfolgende Auswerteschaltung hinreichend schnell ist. Die digitalisierten Kamerasignale werden zwei Faltungsbausteinen (14a, 14b) zugeführt. Der Faltungsbaustein (14a) berechnet durch eine zweidimensionale Faltungsoperation einen ersten Ausdruck (Z) und der zweite Faltungsbaustein (14b) berechnet ebenfalls durch eine zweidimensionale Faltungsoperation einen zweiten Ausdruck (N).

Die zweidimensionalen Faltungsoperationen in den Faltungsbausteinen (14a, 14b) lassen sich am einfachsten anhand der Figur 2b erläutern. In der Fig. 2b ist ein Ausschnitt von 10x10 als Quadrate gekennzeichneten Pixeln des Kamerasensors (11a) dargestellt. Das aufgenommene Streifenmuster ist durch die gestrichelten Linien (22) angedeutet. Dieses Streifenmuster liegt diagonal zu den Zeilen und Spalten des Kamerasensors (11a).

Zu jedem Bildpunkt des Kamerasensors (11a) wird ein zugehöriger Phasenwert berechnet, indem die Intensitätsmeßwerte der acht benachbarten Bildpunkte mit berücksichtigt werden. Es werden also die Intensitätsmeßwerte innerhalb eines Faltungsfensters von 3x3 Punkten gefaltet. Zu jedem Punkt $(P_{ij})$ (i = 4,5,6; j = 2,3,4) gehören zwei Faltungsgewichte $(Z_{ij})$ und $(N_{ij})$, wobei die $(Z_{ij})$ im Faltungsbaustein (14a) und die $(N_{ij})$ im Faltungsbaustein (14b) implementiert sind.

In beispielhafter Weise sind die zu den Punkten $(P_{ij})$ des Faltungsfensters gehörigen Faltungsgewichte $(Z_{ij})$ und $(N_{ij})$ in folgender Tabelle aufgelistet:

| ij | $Z_{ij}$ | $N_{ij}$ |
|------|------|------|
| P42 | -2 | -2 |
| P52 | 3 | -1 |
| P62 | 0 | 2 |
| P43 | 3 | -1 |
| P53 | 0 | 4 |
| P63 | -3 | -1 |
| P44 | 0 | 2 |
| P54 | -3 | -1 |
| P64 | 2 | -2 |

Mit diesen Faltungsgewichten $(Z_{ij}, N_{ij})$ ergeben sich Nullstellen der Fehlerfunktion für Phasenstufen von 90° entlang der Zeilen und Spalten der Kamerapixel sowie für Phasenstufen von 30°, 90° und 150° entlang der Richtung senkrecht zu dem Streifenmuster (22).

Die Faltungsgewichte $(Z_{ij})$ werden im Faltungsbaustein (14a) mit den Intensitätsmeßwerten des Kamerasensors an der jeweiligen Stelle $(P_{ij})$ multipliziert und anschließend werden diese neun Faltungsprodukte zum Ausdruck

$$\left(Z = \sum_{i,j} Z_{ij} I(P_{ij})\right)$$

aufaddiert. Analog werden die Faltungsgewichte $(N_{ij})$ im Faltungsbaustein (14b) mit den Intensitätsmeßwerten des Kamerasensors an der jeweiligen Stelle $(P_{ij})$ multipliziert und anschließend zum Ausdruck

$$\left(N = \sum_{i,j} N_{ij} I(P_{ij})\right)$$

aufaddiert. Die Ausdrücke (Z,N) werden demjenigen Bildpunkt zugeordnet, der sich in der Mitte des Faltungsfensters, also an der mit (P53) bezeichneten Stelle befindet.

Die Ausgänge der beiden Faltungsbausteine (14a,14b) werden einem Arcustangensbaustein (15) zugeführt, der den Arcustangens aus dem Verhältnis Z/N der beiden Ausdrücke (Z,N) berechnet. Dazu sind in einer Look-Up-Table (16) die Funktionswerte des Arcustangens abgelegt. Anschließend werden die so berechneten Phasenwerte $\phi$ in einem Bildspeicher (17b) als Phasenbild abgelegt.

Um über das gesamte Kamerabild zugehörige Phasenwerte zu ermitteln, wird das gesamte Kamerabild von dem Faltungsfenster abgerastert. Dies ist in Fig. 2b durch die beiden Pfeile (Pf1, Pf2) angedeutet.

In einer darauffolgenden Subtraktionseinheit (18) werden von den Phasenwerten des Bildspeichers (17b) noch Referenzphasenwerte abgezogen, die in einem weiteren Bildspeicher (17a) abgelegt sind. Diese Referenzphasenwerte können sowohl mathematisch berechnete Phasenwerte sein, die einem Soll-Meßergebnis entsprechen, als auch die Phasenwerte einer Kalibriermessung sein. Die Differenz der Phasenwerte wird in einem weiteren Bildspeicher (19) zwischengespeichert, anschließend in einem Digital-Analog-Wandler (20) analogisiert und auf einem der Datenausgabe dienenden Monitor (21) graphisch dargestellt.

Die Orientierung des Streifenmusters diagonal zu den Zeilen und Spalten des Kamerasensors ist aus zwei Gründen besonders vorteilhaft: Zum einen hat die Fehlerfunktion gerade senkrecht zur Streifenrichtung 3 Nullstellen, so daß auch bei sich ändernder Streifenfrequenz die Phasenwerte mit hoher Genauigkeit ermittelt werden. Zum anderen ergibt sich senkrecht zur Streifenrichtung ein Abstand der Meßpunkte, der um $1/\sqrt{2}$ geringer ist, als der Abstand zeilen- und spaltenweise benachbarter Pixel des Kamerasensors (11a), was der räumlichen Auflösung zugute kommt.

Anhand der Fig. 2b wurde die Auswertung des Streifenmusters mit einem Faltungsfenster erläutert, das sich über 3x3 Pixel des Kamerasensors erstreckt. Die Fehler der Phasenwerte können jedoch noch wesentlich reduziert werden, wenn die Intensitätsmeßwerte jeweils eines Bereichs von 5x5 Pixeln des Kamerasensors zur Faltung herangezogen werden. In diesem Fall werden die Phasenfehler deutlich reduziert, denn die Faltungsgewichte können dann so gewählt werden, daß die Fehlerfunktion senkrecht zur Streifenrichtung und damit diagonal zu den Spalten und Zeilen des Kamerasensors (11a) sieben Nullstellen und in Richtung der Zeilen und Spalten jeweils drei Nullstellen hat.

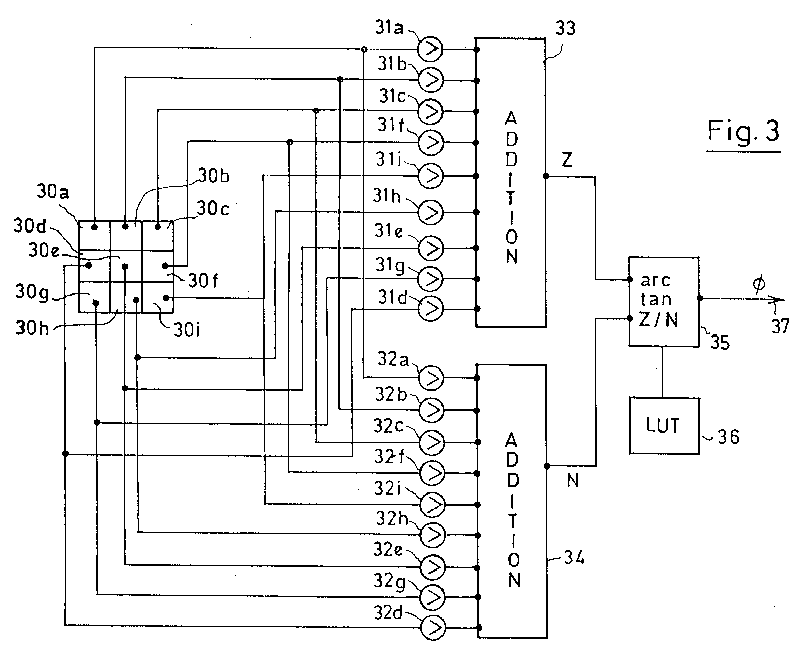

Die Anordnung in Fig. 3 hat neun Lichtsensoren (30a - 30i), die quadratisch angeordnet sind. Die Ausgangssignale jedes Lichtsensors (30a-i) sind jeweils zwei Verstärkergruppen (31a-i), (32a-i) zugeführt, die die Ausgangssignale der Lichtsensoren (30a-i) um festeingestellte Faktoren verstärken.

Die Ausgangssignale der ersten Verstärkergruppe (31a-i) werden in einer ersten Additionseinheit (33) zu einem Ausdruck (Z) aufakkumuliert und die Ausgangssignale der zweiten Verstärkergruppe (32a-i) werden in einer zweiten Additionseinheit zu einem zweiten Ausdruck (N) aufakkumuliert. Aus den beiden Ausdrücken (Z,N) wird in einem Arcustangensbaustein (35) der Arcustangens aus dem Verhältnis (Z/N) beider Ausdrücke berechnet und zur Datenausgabe weitergegeben, was durch den Pfeil (37) angedeutet ist.

Zur Bestimmung des Arcustangens sind die Funktionswerte des Arcustangens wiederum in einer Lock-Up-Table (36) abgelegt.

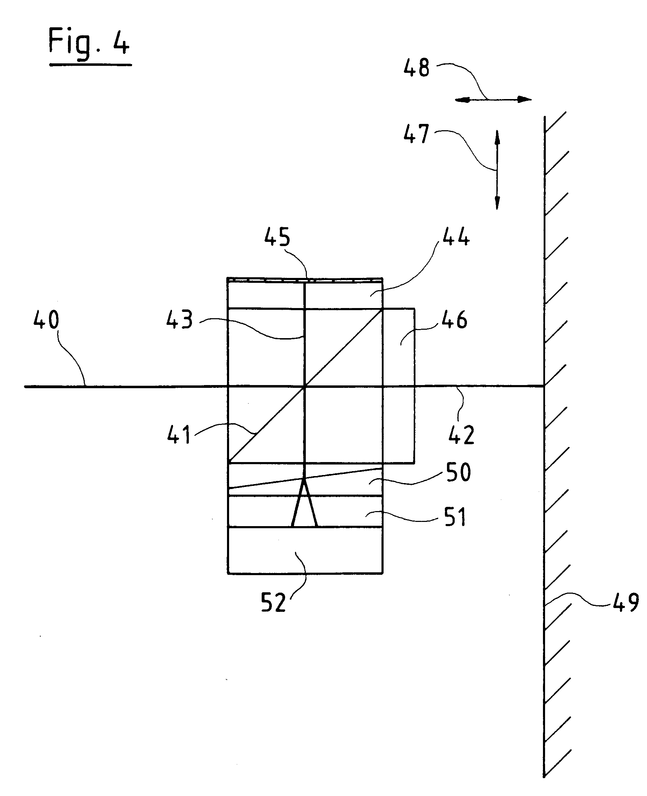

Die Verstärkungsfaktoren der beiden Verstärkergruppen (31a-i), (32a-i) sind analog zu den Faltungsgewichten eines 3x3 Faltungsfensters so gewählt, daß die Fehlerfunktion des Phasenwertes in einer Richtung diagonal zu dem Quadrat der Lichtsensoren (30a-i) mindestens drei Nullstellen hat. Eine solche fest verdrahtete Sensoranordnung ist für das Interferometer zur Abstandsmessung, das in der Fig. 4 dargestellt ist, besonders vorteilhaft.

Das in der Fig. 4 dargestellte Interferometer hat einen polarisierenden Strahteiler (41), der den einfallenden Laserstrahl (40) in einen Meßstrahl (42) und einen Referenzstrahl (43) lenkt. Der Referenzstrahl (43) wird nach Durchtritt durch eine λ/4 - Platte (44) an einem Referenzspiegel (45) in sich reflektiert.

Der Meßstrahl (42) wird nach Durchtritt durch eine zweite λ/4 - Platte (46) an einer sich in Richtung der beiden Pfeile (47) und (48) bewegenden spiegelnder Fläche (49) reflektiert. Der reflektierte Meßstrahl (42) und der reflektierte Referenzstrahl (43) werden durch den polarisierenden Strahteiler (41) zu einem Wollaston -Prisma (50) gelenkt. Das Wollaston-Prisma (50) bewirkt, daß die beiden Teilstrahlen gegeneinander geneigt werden.

Hinter dem Wollaston-Prisma ist ein Polarisator (51) angeordnet, der die beiden geneigten Strahlen interferenzfähig macht. Durch die Neigung entsteht ein Streifenmuster, das dann die Trägerfrequenz aufweist, wenn die spiegelnde Fläche (49) senkrecht zum Meßstrahl (42) orientiert ist. Dieses Streifenmuster wird von einem Detektor (52) entsprechend der Fig. 3 detektiert.

Eine Verschiebung der spiegelnden Fläche (49) in Richtung des Pfeils (48) bewirkt eine Änderung der von dem Detektor (52) ermittelten Phase ($\phi$).

Eine Kippung der reflektierenden Fläche (49) führt zu einer Änderung der Trägerfrequenz. Der von dem Detektor (52) berechnete Phasenwert ist jedoch weitgehend unabhängig von dieser Trägerfrequenz, so daß der Phasenwert auch von einer Kippung der reflektierenden Fläche (49) weitgehend unabhängig ist.

**Patentansprüche**

1. Verfahren zur Messung der Phase eines Signals, das auf einer Trägerwelle durch Phasenmodulation aufmoduliert ist, mit den Schritten
   - Aufnahme von Meßwerten (I1-I5) des Signals bei mehreren Phasenlagen (P1-P5), die durch zwischenliegende Phasenstufen beabstandet sind, wobei die zwischenliegenden Phasenstufen Soll-Phasenstufen bezüglich der Trägerwelle entsprechen,
   - Berechnung des Phasenwertes Φ aus dem Verhältnis (Z/N) eines ersten Ausdruckes Z und eines zweiten Ausdruckes N, wobei der erste Ausdruck Z und der zweite Ausdruck N aus den Meßwerten (I1-I5) berechnet wird und
   - wobei sich der erste Ausdruck Z als Linear-Kombination

$$Z = \sum_{i=1}^{m} a_i \, Z_i$$

   aus mindestens drei Ausdrücken $Z_i$ einer ersten Art und der zweite Ausdruck N als Linear-Kombination

$$N = \sum_{i=1}^{m} a_i \, N_i$$

   aus mindestens drei Ausdrücken einer zweiten Art zusammensetzt, dadurch gekennzeichnet,
   - daß die mindestens drei Ausdrücke $Z_i$ erster Art und die mindestens drei Ausdrücke $N_i$ zweiter Art aus den Meßwerten (I1-I5) unter Berücksichtigung der Sollphasenstufen berechenbar sind und so gewählt sind, daß aus dem Verhältnis ($Z_i/N_i$) jedes Ausdruckes erster Art $Z_i$ und des zugehörigen Ausdruckes zweiter Art $N_i$ für ein Signal mit der Frequenz der Trägerwelle jeweils der selbe korrekte Phasenwert berechenbar ist,
   - wobei bei Abweichungen der Phasenstufen von den Sollphasenstufen die berechneten Phasenwerte mit einem Phasenfehler behaftet sind, der einen zum doppelten Phasenwert periodischen Verlauf mit einer als Fehlerfunktion des Phasenwertes bezeichneten Amplitude $\epsilon$ aufweist und wobei
   - die Faktoren $a_i$ so gewählt sind, daß die Fehlerfunktion des Phasenwertes als Funktion der Phasenstufen mindesten drei Nullstellen hat.

2. Verfahren nach Anspruch 1, dadurch gekennzeichnet, daß jeder der Ausdrücke $Z_i$ der ersten Art und der zugehörigen Ausdrücke $N_i$ der zweiten Art anhand der Meßwerte des Signals bei drei Phasenlagen berechnet wird.

3. Verfahren nach Anspruch 1, dadurch gekennzeichnet, daß die Meßwerte innerhalb einer Periode der Trägerwelle aufgenommen werden.

4. Verfahren nach einem der Ansprüche 1-3, gekennzeichnet durch seine Verwendung zur Auswertung eines Streifenbildes.

5. Verfahren nach Anspruch 4, dadurch gekennzeichnet, daß das Streifenbild ein Vielstreifenbild ist.

6. Vorrichtung zur Durchführung des Verfahrens nach Anspruch 1 zur Messung der Phase eines Signals, das auf einer Trägerwelle durch Phasenmodulation aufmoduliert ist, mit Detektoren (30a-i) zur Messung des Signals bei mindestens fünf verschiedenen Phasenlagen, die durch zwischenliegende Phasenstufen beabstandet sind, wobei die zwischenliegenden Phasenstufen den Soll-Phasenstufen bezüglich der Trägerwelle entsprechen, und mit einer Auswerteeinheit (35, 36) zur Berechnung eines Phasenwertes aus diesen fünf Meßwerten, dadurch gekennzeichnet, daß

EP 0 455 218 B1

- eine erste und eine zweite Verstärkungseinheit (31a-i, 32a-i) vorgesehen ist, denen die Ausgangssignale der Detektoren (30a-i) zugeführt sind,
- daß eine erste Additionseinheit (33) zur Aufaddition der zu den Phasenlagen zugehörigen Ausgangssignale der ersten Verstärkungseinheit (31a-i) vorgesehen ist,
- daß eine zweite Additionseinheit (34) zur Aufaddition der zu den Phasenlagen zugehörigen Ausgangssignale der zweiten Verstärkungseinheit (32a-i) vorgesehen ist,
- und daß in der Auswerteeinheit (35, 36) aus dem Quotienten der verstärkten und aufaddierten Detektorsignale ein zugehöriger Phasenwert berechnet wird,
- wobei bei Abweichungen der Phasenstufen von den Sollphasenstufen die berechneten Phasenwerte mit einem Phasenfehler behaftet sind, der einen zum doppelten Phasenwert periodischen Verlauf mit einer als Fehlerfunktion des Phasenwertes bezeichneten Amplitude $\epsilon$ aufweist und
- wobei die Verstärkungsfaktoren beider Verstärkungseinheiten (31a-i, 32a-i) in Abhängigkeit von den jeweiligen Phasenlagen derart gewählt sind, daß die Fehlerfunktion des Phasenwertes als Funkton der Phasenstufen mindestens drei Nullstellen hat.

7. Vorrichtung nach Anspruch 6, dadurch gekennzeichnet, daß die Detektoren (30a-i) optoelektronische Sensoren sind.

8. Vorrichtung nach Anspruch 7, dadurch gekennzeichnet, daß die Sensoren (30a-i) zeilen- und spaltenweise auf einer Fläche angeordnet sind und daß die Anzahl der Zeilen und der Spalten gleich ist.

9. Vorrichtung zur Durchführung des Verfahrens nach Anspruch 1 zur Messung der Phase eines Signales, das auf einer Trägerwelle durch Phasenmodulation aufmoduliert ist, mit Detektoren (11) zur Messung des Signals bei mindestens fünf verschiedenen Phasenlagen, die durch zwischenliegende Phasenstufen beabstandet sind, wobei die zwischenliegenden Phasenstufen den Soll-Phasenstufen bezüglich der Trägerwelle entsprechen, mit zwei den Detektoren nachgeschalteten Faltungsbausteinen (14a, 14b), die durch eine Faltung der Detektorsignale zwei Ausdrücke (Z, N) berechnen, aus denen nachfolgend ein zugehöriger Phasenwert durch Quotientenbildung berechnet wird, dadurch gekennzeichnet, daß in den Faltungsbausteinen (14a, 14b) die Detektorsignale mit Faltungsgewichten multipliziert und die Produkte nachfolgend aufaddiert werden, daß bei Abweichungen der Phasenstufen von den Sollphasenstufen die berechneten Phasenwerte mit einem Phasenfehler behaftet sind, der einen zum doppelten Phasenwert periodischen Verlauf mit einer als Fehlerfunkton des Phasenwertes bezeichneten Amplitude $\epsilon$ aufweist und daß die Faltungsgewichte derart gewählt sind, daß die Fehlerfunktion des Phasenwertes als Funktion der Phasenstufen mindestens drei Nullstellen hat.

10. Vorrichtung nach Anspruch 9, dadurch gekennzeichnet, daß die Detektoren Sensorelemente einer Kamera (11) sind.

11. Vorrichtung nach Anspruch 10, gekennzeichnet durch ihre Verwendung zur Messung der Streifenphase eines stationären Streifenmusters.

12. Vorrichtung nach Anspruch 11, dadurch gekennzeichnet, daß die Kamera (11) eine CCD-Kamera ist und daß das Streifenmuster diagonal zu den Spalten und Zeilen des Kamerasensors liegt.

**Claims**

1. Method for measuring the phase of a signal which is modulated on carrier wave by phase-modulation the method comprising the steps:
   - recording measurement values (I1-I5) of the signal at a plurality of phase positions (P1-P5) which are separated by intermediate phase steps, whereby the intermediate phase steps correspond to nominal phase steps with respect to the carrier wave,
   - calculating the phase value $\Phi$ from the quotient (Z/N) of a first expression Z and of a second expression N, whereby the first expression Z and the second expression N are calculated from the measurement values (I1-I5) and

- whereby the first expression is a linear combination

$$Z = \sum_{i=1}^{m} a_i \ Z_i$$

of at least three expressions $Z_i$ of a first kind and whereby the second expression N is a linear combination

$$N = \sum_{i=1}^{m} a_i \ N_i$$

of at least three expressions $N_i$ of a second kind, characterized by the fact
- that the at least three expressions $Z_i$ of the first kind and the at least three expressions $N_i$ of the second kind can be calculated from the measurement values (I1-I5) under consideration of the nominal phase steps and are selected so that from the quotient ($Z_i/N_i$) of each expression $Z_i$ of the first kind and the corresponding expression $N_i$ of the second kind the same correct phase value can be calculated for a signal having the frequency of the carrier wave,
- whereby in case of deviations between the phase steps and the nominal phase steps the calculated phase value comprises a phase error which is a periodical function with respect to the double of the phase value and has an amplitude $\epsilon$ defining the error function of the phase value and whereby
- the factors $a_i$ are selected so that the error function of the phase value as a function of the phase steps has at least three zeros.

2. Method according to claim 1, characterized by the fact that each of the expressions $Z_i$ of the first kind and of the corresponding expressions $N_i$ of the second are calculated by the aid of the measurement values of the signal at three phase positions.

3. Method according to claim 1, characterized by the fact that the measurement values are recorded within one period of the carrier wave.

4. Method according to one of the claims 1-3, characterized by its application to the evaluation of a fringe image.

5. Method according to claim 4, characterized by the fact that the fringe image is a multiple fringe image.

6. Apparatus for carrying out the method of claim 1 for measuring the phase of a signal which is modulated on a carrier wave by phase modulation, the apparatus comprising detectors (30a-i) for measuring the signal at at least five different phase positions which are separated by intermediate phase steps, whereby the intermediate phase steps correspond to nominal phase steps with respect to the carrier wave, and comprising an evaluating unit (35, 36) for calculating a phase value from these five measurement values, characterized by the fact
- that a first and a second amplification unit (31a-i, 32a-i) are provided which receive the output signals of the detectors (30a-i),
- that a first adder unit (33) is provided for summing the output signals, corresponding to the phase positions, of the first amplification unit (31a-i),
- that a second adder unit (34) is provided for summing the output signals, corresponding to the phase positions, of the second amplification unit (32a-i),
- and that a phase value is calculated by the evaluating unit (35, 36) from the quotient of the amplified and summed detector signals,
- whereby in case of deviations between the phase steps and the nominal phase steps the calculated phase values comprise a phase error which is a periodical function with respect to the double of the phase value and has an amplitude $\epsilon$ defining the error function of the phase value

EP 0 455 218 B1

and

- whereby the amplification factors of both amplification units (31a-i, 32a-i) are selected in dependence on the respective phase positions so that the error function of the phase value as a function of the phase steps has at least three zeros.

7. Apparatus of claim 6, characterized by the fact that the detectors (30a-i) are opto electronic sensors.

8. Apparatus of claim 7, characterized by the fact that the sensors (30a-i) are arranged in lines columns on a surface and that the number of lines equals the number of columns.

9. Apparatus for carrying out the method of claim 1 for measuring the phase of a signal which is modulated on a carrier wave by phase modulation, the apparatus comprising detectors (11) for measuring the signal at at least five different phase position which are separated by intermediate phase steps, whereby the intermediate phase steps correspond to nominal phase steps with respect to the carrier wave, two convolution units (14a, 14b) connected to the detectors which convolution units calculate two expressions (Z, N) by convolution and from which expressions afterwards a corresponding phase value is calculated by calculating a quotient, characterized by the fact that, by the aid of the convolution units (14a, 14b), the detector signals are multiplied by convolution weights and are summed up afterwards, that by deviations of the phase steps from the nominal phase steps the calculated phase values comprise a phase error which is a periodical function with respect to the double of the phase value and has an amplitude $\epsilon$ defining the error function of the phase value and that the convolution weights are selected so that the error function of the phase values as a function of the phase steps has at least three zeros.

10. Apparatus of claim 9, characterized by the fact that the detectors are sensor elements of a camera (11).

11. Apparatus of claim 10, characterized by its application to the measurement of the fringe phase of a stationary fringe pattern.

12. Apparatus of claim 11, characterized by the fact that the camera (11) is a CCD camera and that the fringe pattern is oriented diagonal to the lines and columns of the camera sensor.

**Revendications**

1. Procédé pour le mesurage de la phase d'un signal qui est modulé sur une onde porteuse par une modulation de phase, dont les étapes consistent à:
   - relever des valeurs mesurées (I1 - I5) du signal pour plusieurs relations de phases (P1 - P5) qui sont séparées par des niveaux de phases intermédiaires, les niveaux de phases intermédiaires correspondant à des niveaux de phases théoriques par rapport à l'onde porteuse.
   - calculer la valeur de phase $\phi$ à partir du rapport (Z/N) d'une première expression Z et d'une deuxième expression N, la première expression Z et la deuxième expression N étant calculées à partir des valeurs mesurées (I1 - I5) et
   - où la première expression Z est formée de la combinaison linéaire

$$Z = \sum_{i=1}^{m} a_i Z_i$$

d'au moins trois expressions $Z_i$ d'un premier genre et où la deuxième expression N est formée de la combinaison linéaire

$$N = \sum_{i=1}^{m} a_i N_i$$

12

d'au moins trois expressions d'un deuxième genre, caractérisé en ce

- qu'au moins les trois expressions $Z_i$ d'un premier genre et en ce qu'au moins les trois expressions $N_i$ d'un deuxième genre peuvent être calculées à partir des valeurs mesurées (I1 - I5) en considérant les niveaux de phases théoriques et en ce qu'elles sont choisies de sorte qu'à partir du rapport $(Z_i/N_i)$ de chaque expression du premier genre $Z_i$ et de l'expression associée d'un deuxième genre $N_i$ pour un signal ayant la fréquence de l'onde porteuse, respectivement la même valeur correcte peut être calculée,
- où, en cas d'écarts des niveaux de phases par rapport aux niveaux de phases théoriques, les valeurs de phase calculées sont entachées d'une erreur de phase qui présente un tracé périodique à valeur de phase double avec une amplitude désignée par $\epsilon$ comme fonction d'erreur de la valeur de phase et où
- les facteurs $a_i$ sont choisis de sorte que la fonction d'erreur de la valeur de phase, comme fonction des niveaux de phases, a au moins trois zéros.

2. Procédé selon la revendication 1, caractérisé en ce que chacune des expressions $Z_i$ du premier genre et chacune des expressions $N_i$ associées du deuxième genre est calculée au moyen des valeurs mesurées du signal pour trois relations de phases.

3. Procédé selon la revendication 1, caractérisé en ce que les valeurs mesurées sont relevées durant une période de l'onde porteuse.

4. Procédé selon l'une des revendications 1 - 3, caractérisé par son utilisation pour évaluer un photogramme.

5. Procédé selon la revendication 4, caractérisé en ce que le photogramme est un multiphotogramme.

6. Dispositif pour appliquer le procédé selon la revendication 1 pour le mesurage de la phase d'un signal qui est modulé sur une onde porteuse par une modulation de phase, avec des détecteurs (30a - i) mesurant le signal pour au moins cinq relations de phases différentes qui sont séparées par des niveaux de phases intermédiaires, les niveaux de phases intermédiaires correspondant aux niveaux de phases théoriques par rapport à l'onde porteuse, et avec une unité d'évaluation (35, 36) calculant une valeur de phase à partir de ces cinq valeurs mesurées, caractérisé en ce que

- une première et une deuxième unité d'amplification (31a-i, 32a-i) sont prévues, vers lesquelles les signaux de sortie des détecteurs (30a-i) sont conduits,
- une première unité d'addition (33) est prévue pour additionner les signaux de sortie de la première unité d'amplification (31a-i), associés aux relations de phases,
- une deuxième unité d'addition (34) est prévue pour additionner les signaux de sortie de la deuxième unité d'amplification (32a-i), associés aux relations de phases,
- et en ce que dans l'unité d'évaluation (35, 36) une valeur de phase associée est calculée à partir du quotient des signaux de détecteurs amplifiés et additionnés,
- où, en cas d'écarts des niveaux de phases par rapport aux niveaux de phases théoriques, les valeurs de phase calculées sont entachées d'une erreur de phase qui présente un tracé périodique à valeur de phase double avec une amplitude désignée par $\epsilon$ comme fonction d'erreur de la valeur de phase et
- où les facteurs d'amplification des deux unités d'amplification (31a-i, 32a-i) sont choisis en fonction des relations de phases respectives, de sorte que la fonction d'erreur de la valeur de phase, comme fonction des niveaux de phases, a au moins trois zéros.

7. Dispositif selon la revendication 6, caractérisé en ce que les détecteurs (30a-i) sont des capteurs optoélectroniques.

8. Dispositif selon la revendication 7, caractérisé en ce que les capteurs (30a-i) sont agencés sur une surface suivant des lignes et des colonnes et que le nombre de lignes et de colonnes est le même.

9. Dispositif pour appliquer le procédé selon la revendication 1 pour le mesurage de la phase d'un signal qui est modulé sur une onde porteuse par une modulation de phase, avec des détecteurs (11) mesurant le signal pour au moins cinq relations de phases différentes qui sont espacées par des niveaux de phases intermédiaires, les niveaux de phases intermédiaires correspondant aux niveaux de phases théoriques par rapport à l'onde porteuse, avec deux modules (14a, 14b) de convolution branchés à la suite des détecteurs, qui calculent deux expressions (Z, N) par une convolution des signaux de détecteurs, à partir desquelles par la suite une valeur de phase associée est calculée en formant un quotient, caractérisé en ce que, dans les modules de convolution (14a, 14b), les signaux de détecteurs sont multipliés par des poids de convolution et les produits sont additionnés ensuite, qu'en cas d'écarts des niveaux de phases par rapport aux niveaux de phases théoriques, les valeurs de phases calculées sont entachées d'une erreur de phase qui présente un tracé périodique à valeur de phase double avec une amplitude désignée par $\epsilon$ comme fonction d'erreur de la valeur de phase et que les poids de convolution sont choisis de sorte que la fonction d'erreur de la valeur de phase, comme fonction des niveaux de phases, a au moins trois zéros.

10. Dispositif selon la revendication 9, caractérisé en ce que les détecteurs sont des éléments de capteur d'une caméra (11).

11. Dispositif selon la revendication 10, caractérisé par son utilisation pour le mesurage de la phase de bande d'une mire à bandes stationnaires.

12. Dispositif selon la revendication 11, caractérisé en ce que la caméra (11) est une caméra avec dispositif à couplage de charge et que la mire à bandes est en diagonale par rapport aux colonnes et aux lignes du capteur de caméra.

SIGNAL T

Fig. 1a

A+B

A

P1  P2  P3  P4  P5

P

SIGNAL I

A+B

I3

I5

A

I1

I2

I4

5

P

EP 0 455 218 B1

AMPLITUDE $\varepsilon$
DES PHASENFEHLERS
[GRAD]

Fig. 1b

EP 0 455 218 B1

PHASENSTUFE      [GRAD]

## Fig. 2a

EP 0 455 218 B1

# Fig. 2b

P 42    P 52    P 62

P 43

P 53

P 44

P 63

P 54

P 64

Pf 1

Pf 2

22

11 a

Fig. 3

EP 0 455 218 B1

## Fig. 4